Europäisches Patentamt

(19) European Patent Office

Office européen des brevets

(11) Veröffentlichungsnummer: **0 090 879**

**A1**

(12) **EUROPÄISCHE PATENTANMELDUNG**

(21) Anmeldenummer: 82104353.6

(22) Anmeldetag: 18.05.82

(51) Int. Cl.³: **A 01 F 25/20**
A 01 B 71/00, A 01 D 55/264

(30) Priorität: 21.01.82 DE 3201690
26.03.82 DE 3211115

(43) Veröffentlichungstag der Anmeldung:
12.10.83 Patentblatt 83/41

(84) Benannte Vertragsstaaten:
AT BE CH DE FR GB IT LI LU NL SE

(71) Anmelder: B. Strautmann & Söhne GmbH & Co.
Bielefelder Strasse
D-4518 Bad Laer 1(DE)

(72) Erfinder: Strautmann, Heinrich, Dipl.-Ing.
Bielefelder Strasse
D-4518 Bad Laer 1(DE)

(74) Vertreter: Stracke, Alexander, Dipl.-Ing. et al,
Patentanwälte Dipl.-Ing. Loesenbeck Dipl.-Ing. Stracke
Jöllenbecker Strasse 164 Postfach 5605
D-4800 Bielefeld 1(DE)

(54) Hydraulische Antriebseinrichtung für landwirtschaftliches Arbeitsgerät.

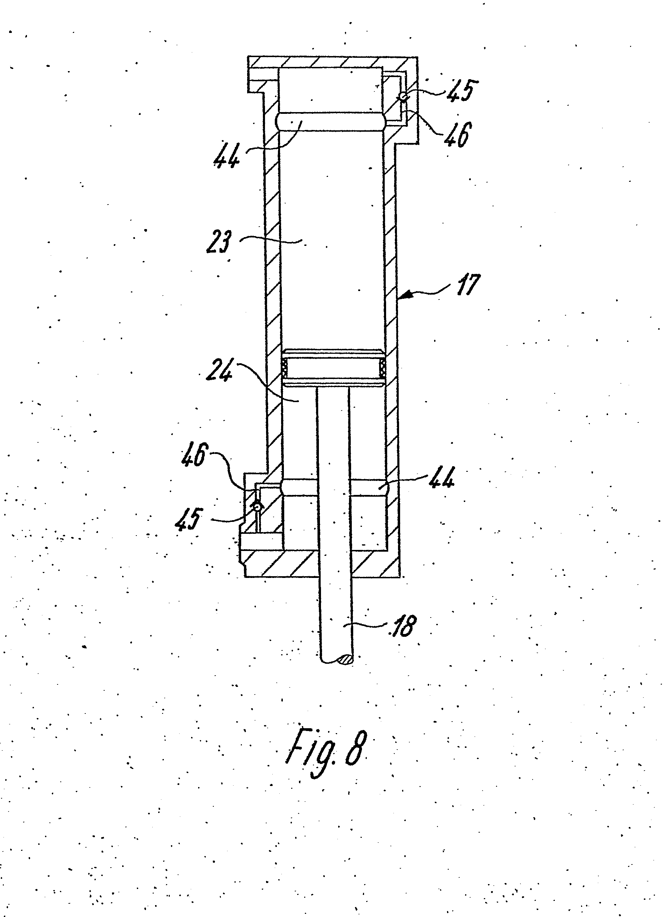

(57) Das in Fig. 2 dargestellte landwirtschaftliche Arbeitsgerät ist ein Flachsilo-Entnahmegerät.

An dessen Gestell 1 ist im oberen Endbereich ein Führungsrahmen 3 angebracht, entlang dem eine Schneidwerk 5 geführt ist.

Der das Messer 4 tragende Messerhalter 19 des Schneidwerkes 5 ist an die Kolbenstange 18 eines Arbeitszylinders 17 angeschlossen, der als doppeltwirkender Zylinder ausgebildet ist. Die Zylinderkammern 23 und 24 des Arbeitszylinders 17 sind über Hydraulikleitungen 15 und 16 mit den Zylinderkammern 21 und 22 eines Pumpzylinders 14 verbunden, dessen Kolbenstange 13 mittels eines Kurbelantriebes 10 antreibbar ist. Der Kurbelantrieb 10 ist seinerseits mit der Zapfwelle 9 eines nicht dargestellten Schleppers kuppelbar, beispielsweise kann der Kurbelantrieb 10 unmittelbar auf die Zapfwelle 9 aufgesteckt sein.

Sämtliche Zylinderkammern 21 bis 24 sind ständig mit Öl gefüllt, so daß durch die über den Kurbelantrieb 10 erzwungene Vor- und Zurückbewegung der Kolbenstange 13 des Pumpzylinders 14 der Arbeitszylinder 17 und damit der Messerhalter 19 nebst Messer 4 betätigt wird.

Fig.2

6/3

B. Strautmann & Söhne GmbH & Co.,
Bielefelder Straße, 4518 Bad Laer 1

BEZEICHNUNG GEÄNDERT
siehe Titelseite

Landwirtschaftliches Arbeitsgerät

————————

Die vorliegende Erfindung betrifft ein an einem mit einer Zapfwelle ausgestatteten Schlepper anschließbares landwirtschaftliches Arbeitsgerät, bei dem mindestens ein Arbeitsaggregat antreibbar ist.

Es sind landwirtschaftliche Arbeitsgeräte bekannt, bei denen der Antrieb des Arbeitsaggregates rein mechanisch erzeugt wird.

Weiterhin sind landwirtschaftliche Arbeitsgeräte bekannt, bei denen das Arbeitsaggregat hydraulisch angetrieben wird. Dabei wird bei den bislang bekannten Arbeitsgeräten als Druckerzeuger die Schlepperhydraulik eingesetzt.

Bei mechanischen Antrieben besteht der prinzipielle
Nachteil, daß durch die erforderlichen Getriebeteile
konstruktive Einschränkungen bei der Gestaltung der Arbeitsgeräte in Kauf genommen werden müssen.

Bei den hyfraulischen Antrieben besteht der Nachteil,
daß die zur Verfügung stehende Antriebsleistung der
Schlepperhydraulik in vielen Fällen zu gering ist.

Der vorliegenden Erfindung liegt die Aufgabe zugrunde,
ein landwirtschaftliches Arbeitsgerät der gattungsgemäßen Art so zu gestalten, daß ein hydraulischer Antrieb für das Arbeitsaggregat verwirklicht wird, der
von der Schlepperhydraulik unabhängig ist.

Diese Aufgabe wird erfindungsgemäß dadurch gelöst, daß
als Antriebsorgan für das Arbeitsaggregat mindestens
ein hydraulischer Arbeitszylinder vorgesehen ist, der
seinerseits über mindestens einen, als Druckerzeuger
dienenden und mittels eines Kurbelantriebes betätigbaren Pumpzylinder antreibbar ist, wobei der Kurbelantrieb des Pumpzylinders mit der Zapfwelle des Schleppers
kuppelbar ist.

Durch diese Konstruktion wird erreicht, daß das hydraulische System des Arbeitsgerätes völlig unabhängig ist
vom Hydrauliksystem des Schleppers, und als weiterer
Vorteil kommt hinzu, daß durch den mit der Zapfwelle
des Schleppers kuppelbaren Kurbelantrieb Leistungen
erzielbar sind, die mit den herkömmlichen Antriebssystemen über die Schlepperhydraulik nicht erreicht
werden können.

- 3 -

Die Drehzahl der Zapfwelle des Schleppers kann innerhalb des Kurbelantriebes derart untersetzt werden, daß
letztendlich beliebige Hubzahlen des Arbeitsaggregates
erreichbar sind.

Weitere Merkmale der Erfindung sind Gegenstand von
Unteransprüchen.

In den beigefügten Zeichnungen sind Ausführungsbeispiele der Erfindung dargestellt, die im folgenden
näher beschrieben werden.

Es zeigen:

Fig. 1    eine Seitenansicht eines Schleppers mit einem
          Flachsilo-Entnahmegerät,

Fig. 2    eine schematisch dargestellte Seitenansicht
          des Flachsilo-Entnahmegerätes nach Fig. 1,
          teilweise im Schnitt,

Fig. 3    eine Ansicht in Richtung des Pfeiles III in
          Fig. 2,

Fig. 4    eine Draufsicht auf das Flachsilo-Entnahme-
          gerät gemäß Fig. 2,

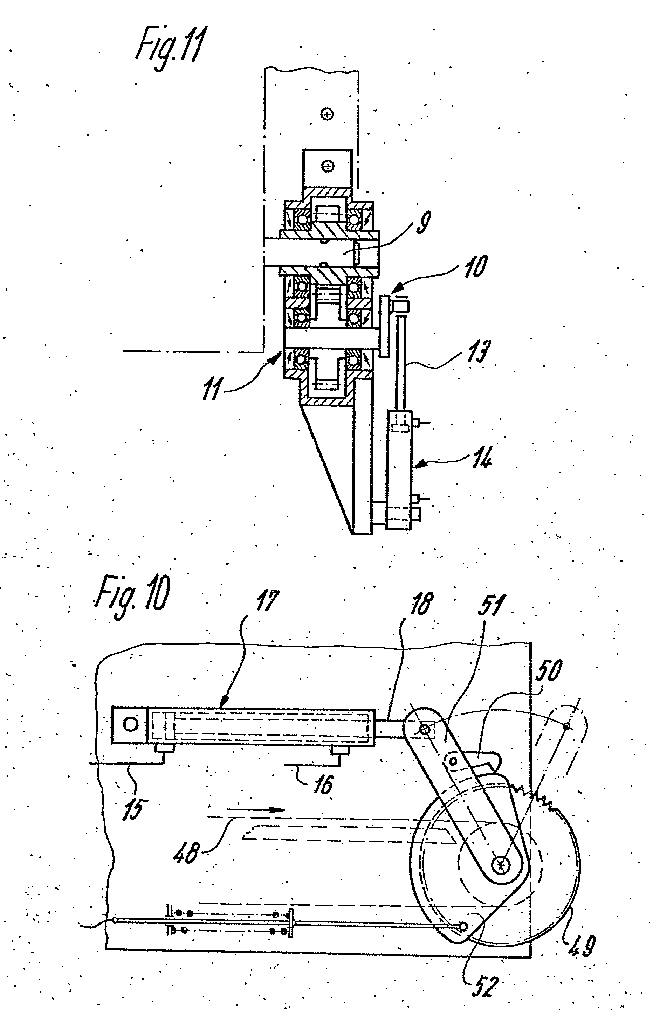

Fig. 5    einen Schnitt nach der Linie V - V in Fig. 2,

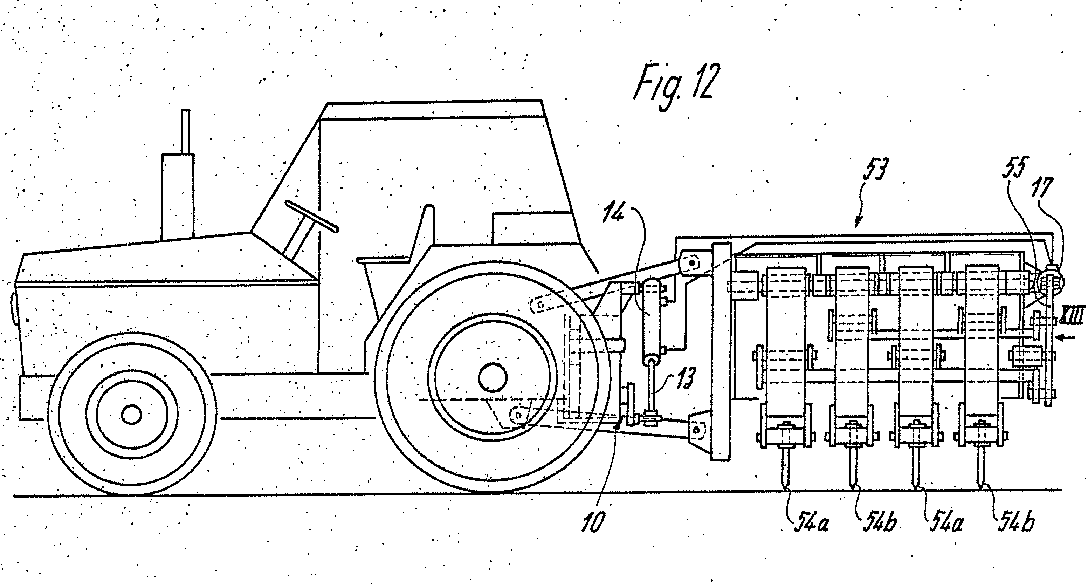

Fig. 6    eine schematische Darstellung eines Messeran-
          triebes eines Flachsilo-Entnahmegerätes nach
          einem weiteren Ausführungsbeispiel der Erfindung,

Fig. 7    eine schematische Darstellung eines Flachsilo-
          Entnahmegerätes nach einem weiteren Ausfüh-
          rungsbeispiel der Erfindung;

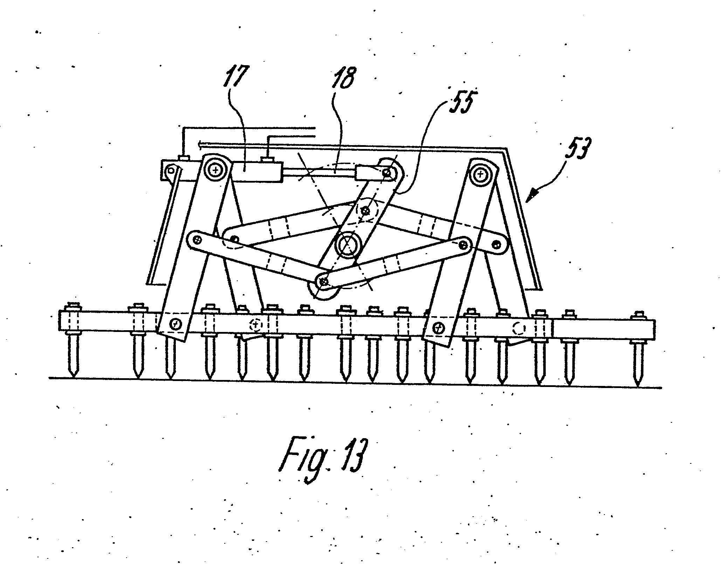

Fig. 8    einen Schnitt durch einen Arbeitszylinder
eines Flachsilo-Entnahmegerätes nach einem
weiteren Ausführungsbeispiel,

Fig. 9    einen an einen Schlepper angeschlossenen Anhänger mit antreibbarem Kratzboden,

Fig. 10   den Antrieb des Kratzbodens des Anhängers
nach Fig. 9 in vergrößerter Darstellung,

Fig. 11   die in Fig. 9 mit XI bezeichnete Einzelheit,
vergrößert und im Schnitt dargestellt, wobei
der Pumpzylinder gegenüber einer Arbeitslage
gemäß Fig. 9 um 90° nach unten abgeklappt gezeichnet ist,

Fig. 12   eine an einen Schlepper angeschlossene Rüttelegge,

Fig. 13   eine Rückansicht der Rüttelegge im Sinne des
Pfeiles XIII in Fig. 12.

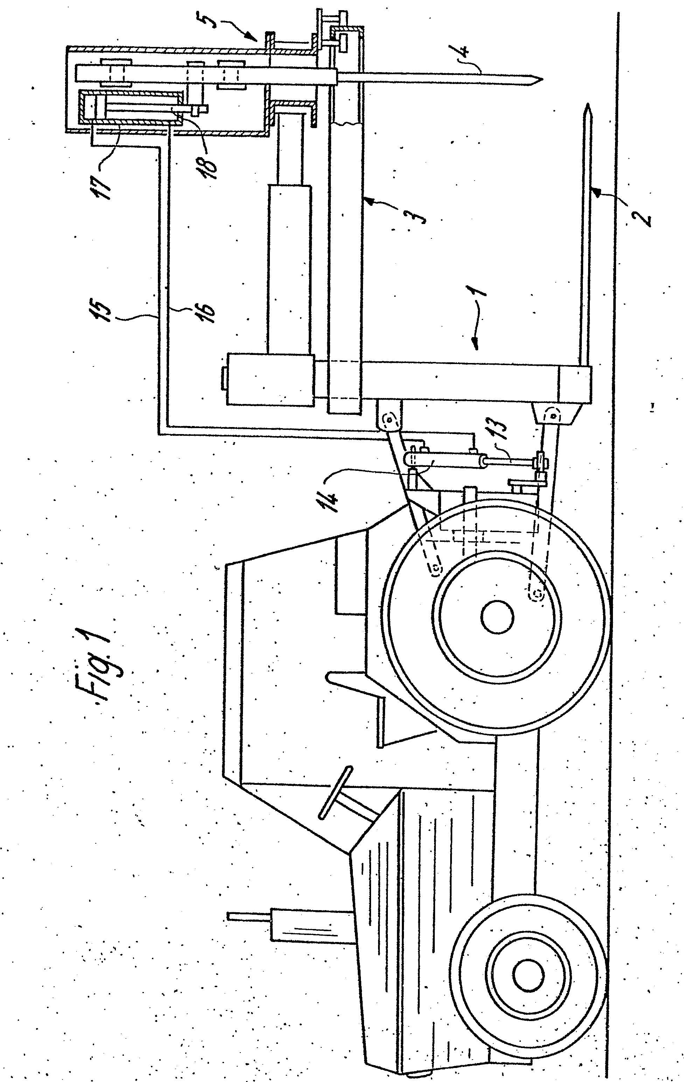

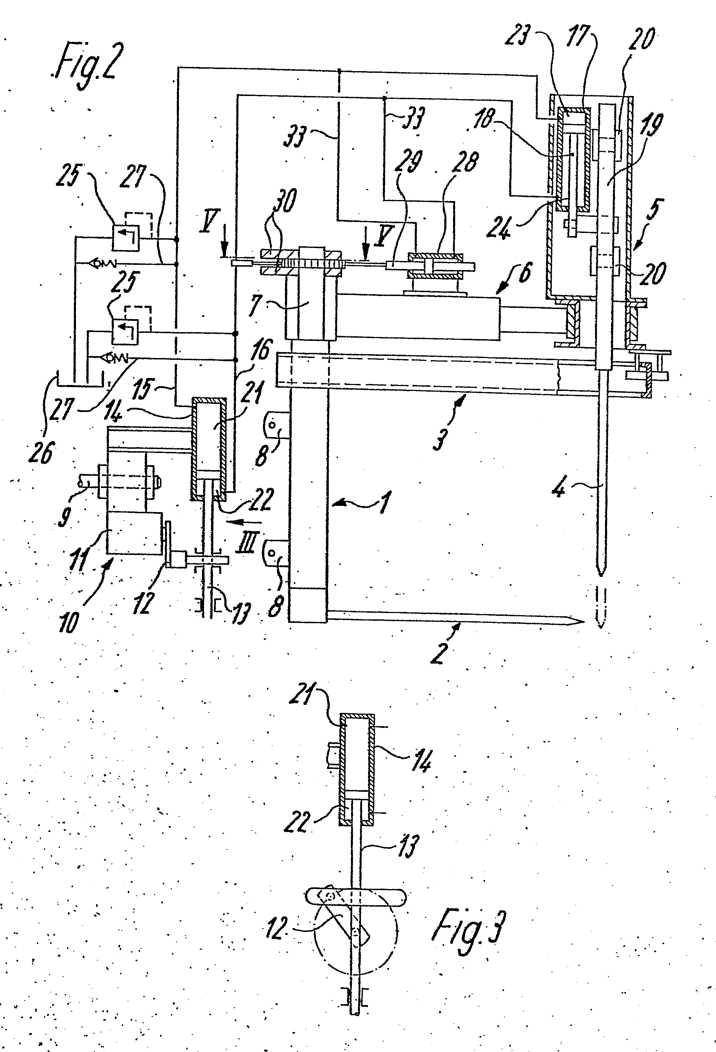

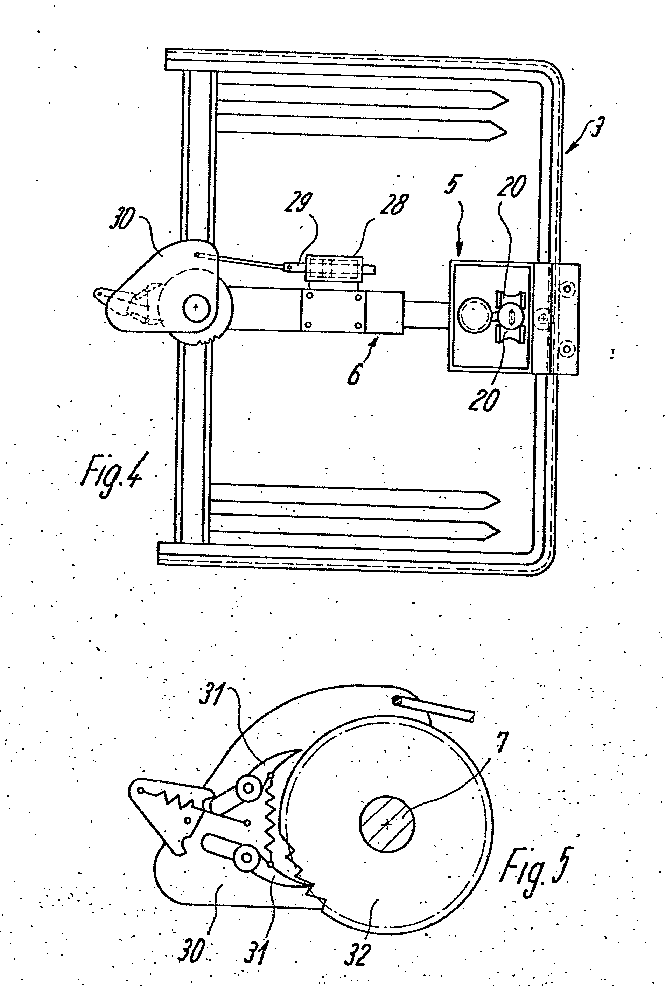

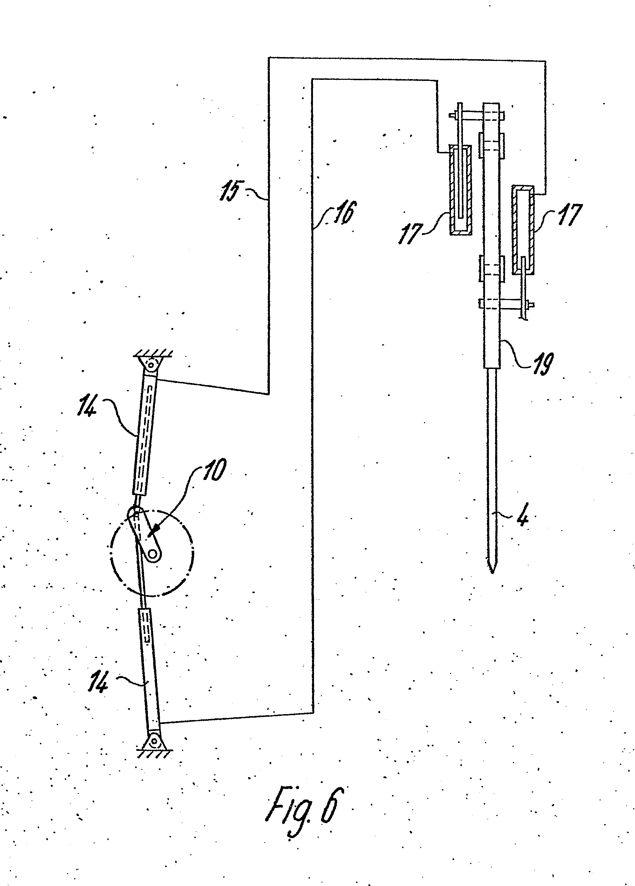

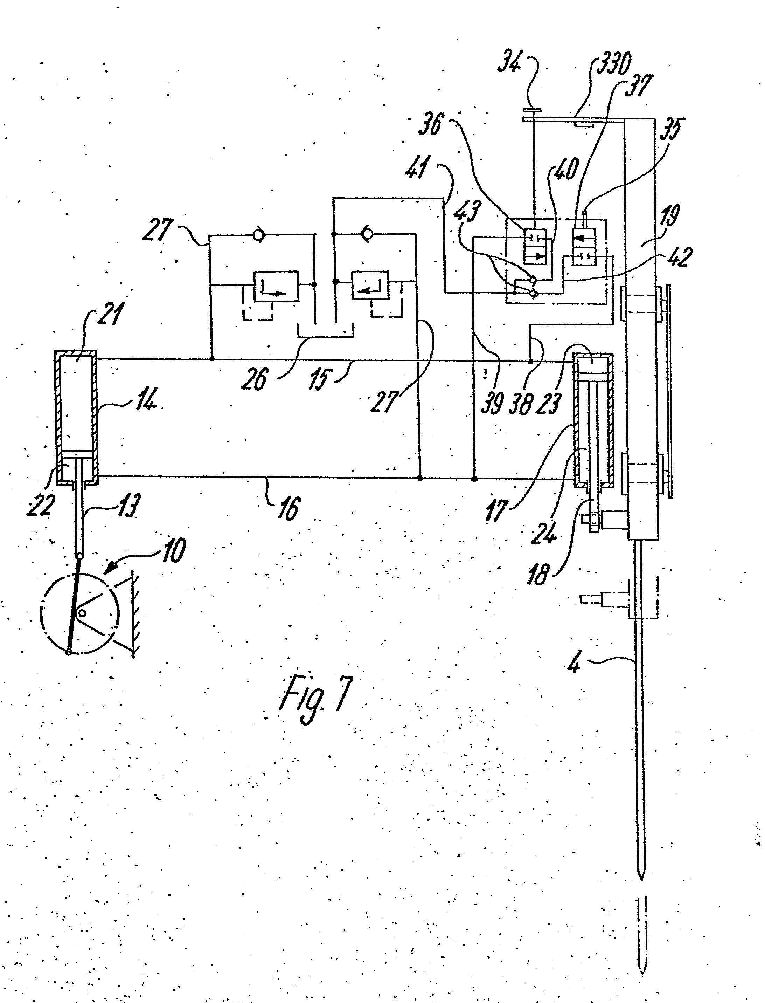

In den Fig. 1 bis 5 ist als Ausführungsbeispiel für ein
landwirtschaftliches Arbeitsgerät, welches an einen mit
einer Zapfwelle ausgestatteten Schlepper anschließbar
ist, ein Flachsilo-Entnahmegerät dargestellt.

Dieses Flachsilo-Entnahmegerät besteht im wesentlichen
aus einem Gestell 1 mit einer im unteren Bereich angeordneten Zinkengabel 2 sowie einem im oberen Endbereich
angeordneten Führungsrahmen 3, an dem ein mit einem
Messer 4 versehenes Schneidwerk 5 geführt ist.

- 5 -

Das Schneidwerk 5 ist am vorderen Ende eines Teleskoparmes 6 befestigt. Der Teleskoparm 6 ist um einen am Gestell 1 angeordneten Achsbolzen 7 schwenkbar.

Das Flachsilo-Entnahmegerät wird mittels mehrerer am Gestell 1 befestigter Haltestangen 8 an der Dreipunkthydraulik oder, alternativ dazu, an der Frontladerschwinge eines landwirtschaftlichen Schleppers befestigt.

Auf die Zapfwelle 9 des Schleppers ist ein Kurbelantrieb 10 aufgesteckt, bestehend aus einem Getriebe 11 und der eigentlichen Kurbel 12, mittels derer die Kolbenstange 13 eines Pumpzylinders 14 in Längsrichtung bewegbar ist.

Der Pumpzylinder 14 ist über zwei Hydraulikleitungen 15 und 16 mit dem Arbeitszylinder 17 des Schneidwerkes 5 verbunden.

An der Kolbenstange 18 des Arbeitszylinders 17 ist ein Messerhalter 19 angeschlossen, der in Führungsrollen 20 entsprechend der Bewegungsrichtung der Kolbenstange 18 des Arbeitszylinders 17 auf- und abbewegbar ist.

Die Zylinderkammern 21 und 22 des Pumpzylinders 14 sowie die Zylinderkammern 23 und 24 des Arbeitszylinders 17 sind vollkommen mit Öl gefüllt.

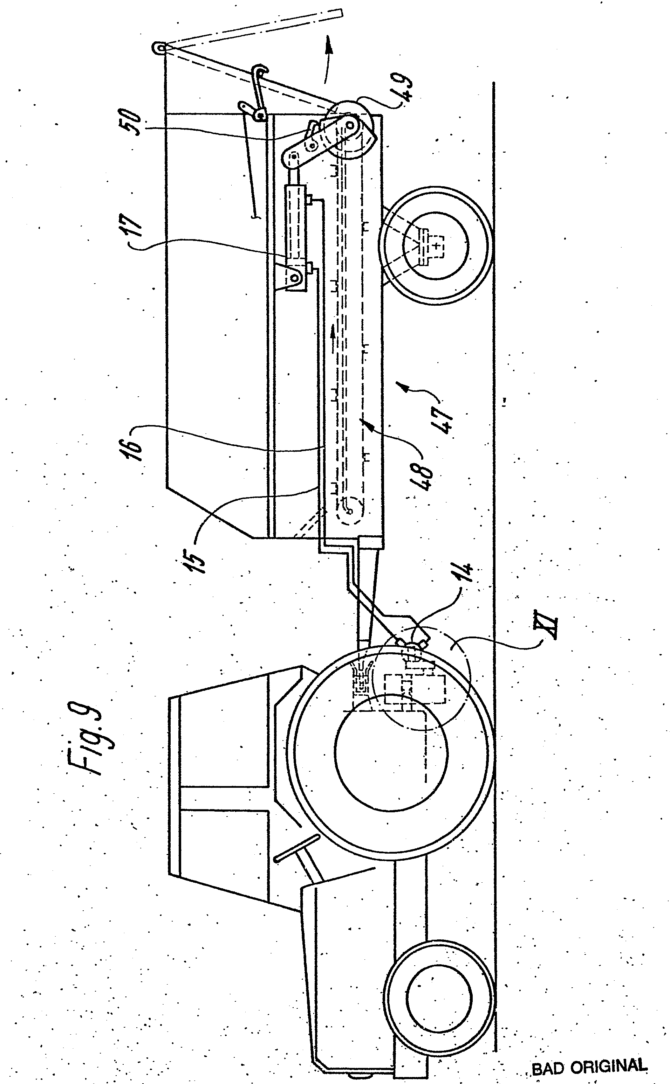

Wird nun die Kolbenstange 13 aus ihrer aus den Fig. 2 und 3 gezeigten unteren Stellung über den Kurbelantrieb 10 nach oben bewegt, so wird das in der Zylinderkammer 21 befindliche Öl über die Hydraulikleitung 15 in die obere Zylinderkammer 23 des Arbeitszylinders 17

- 6 -

gedrückt, wodurch die Kolbenstange 18 des Arbeitszylinders 17 und damit auch der Messerhalter 19 nebst dem daran befestigten Messer 4 nach unten bewegt wird. Das in der Zylinderkammer 24 des Arbeitszylinders 17 befindliche Öl wird bei der Abwärtsbewegung der Kolbenstange 18 über die Hydraulikleitung 16 in die untere Zylinderkammer 22 des Pumpzylinders 14 zurückgeführt.

Nach Überschreiten des Totpunktes des Kurbelantriebes 10 wird die Kolbenstange 13 des Pumpzylinders 14 wieder nach unten geführt, dabei wird das in der unteren Zylinderkammer 22 befindliche Öl über die Hydraulikleitung 16 in die untere Zylinderkammer 24 des Arbeitszylinders 17 gefördert. Dadurch wird die Kolbenstange 18 des Arbeitszylinders 17 nach oben bewegt, das in der oberen Zylinderkammer 23 befindliche Öl fließt dabei über die Hydraulikleitung 15 zurück in die obere Zylinderkammer 21 des Pumpzylinders 14.

Der Pumpzylinder 14 erzeugt damit, angetrieben durch den Kurbelantrieb 10, den für den Arbeitszylinder 17 erforderlichen Druck. Das hydraulische System ist in sich geschlossen und weist zu seiner Absicherung lediglich zwei Überdruckventile 25 auf. Weiterhin ist in das Hydrauliksystem ein Vorratsbehälter 26 integriert, aus dem über Saugleitungen 27 Öl in das Hydrauliksystem zurückgeführt werden kann, falls durch Leckagen od.dgl. innerhalb des Systems ein Ölverlust eintritt.

Wie aus den Fig. 2 und 4 sehr deutlich hervorgeht, ist am Teleskoparm 6 ein Vorschubzylinder 28 angeschlossen, dessen Kolbenstange 29 eine Doppelschwinge 30 antreibt. An der Doppelschwinge 30 sind zwei Klinkenhebel 31 ange- schlossen, von denen jeweils einer in Wirkverbindung mit einem Klinkenrad 32 steht, welches fest mit dem Achsbolzen 7 verbunden ist. Durch die Betätigung der Doppelschwinge 30 und des jeweils wirksamen Klinkenhebels 31 wird der Teleskoparm 6 um eine vertikale Achse geschwenkt.

Das Schneidwerk 5 ist, wie schon erwähnt, entlang des Führungsrahmens 3 geführt, und da dieser Führungsrahmen 3, wie insbesondere Fig. 3 sehr deutlich macht, einen etwa U-förmigen Grundriß aufweist, wird während eines Arbeitsspieles vom Messer 4 des Flachsilo-Entnahmegerätes ein quaderförmiger Block aus einem Flachsilo ausgeschnitten.

Durch Umschalten des jeweils wirksamen Klinkenhebels 31 kann die Schwenkrichtung des Teleskoparmes 6 verändert werden.

Der Vorschubzylinder 28 ist, wie aus Fig. 2 sehr deutlich hervorgeht, über zwei Leitungen 33 mit den Hydraulikleitungen 15 und 16 verbunden, so daß auch der Antrieb des Vorschubzylinders 28 letztendlich vom Pumpzylinder 14 abgeleitet ist.

Beim Ausführungsbeispiel der Erfindung nach den Fig. 1 bis 5 sind Pumpzylinder 14 und Arbeitszylinder 17 als doppeltwirkende Zylinder ausgebildet und untereinander baugleich.

In Fig. 6 ist in schematischer Form dargestellt, daß der Messerhalter 19 auch über zwei einfach wirkende Arbeitszylinder 17 angetrieben werden kann. Es sind dann entsprechend zwei Pumpzylinder 14 erforderlich, die wiederum über einen Kurbelantrieb 10 betätigt werden.

Unabhängig davon, ob mit je einem Pumpzylinder und einem Arbeitszylinder oder mit doppelter Zylinderzahl gearbeitet wird, besteht die Möglichkeit, die Zylinder 14 und 17 mit Kühlrippen zu versehen, um das im System befindliche Öl zu kühlen, da durch den Kurbelantrieb 10 hohe Drücke und Arbeitsleistungen erzielbar sind, die zu einer hohen Öltemperatur führen können. Ebenso ist es denkbar und möglich, an einer beliebigen Stelle des Hydrauliksystems einen zusätzlichen Ölkühler vorzusehen.

Um die Öltemperatur niedrig zu halten, können die Zylinder außerdem auch im Bereich der Leitungsanschlüsse mit vergrößertem Ringraum versehen sein.

In den Fig. 7 und 8 sind Möglichkeiten aufgezeigt, ein Flachsilo-Entnahmegerät so zu verbessern, daß die Synchronisation zwischen Arbeitszylinder und Pumpzylinder unter allen Betriebsbedingungen sichergestellt ist, ohne daß dafür mechanische Endanschläge benötigt werden.

Der prinzipielle Aufbau des Hydrauliksystems entspricht der Ausführung gemäß Fig. 3.

Am Messerhalter 19 des Flachsilo-Entnahmegerätes gemäß Fig. 7 ist ein Ausleger 330 befestigt, der sich quer zur Verschieberichtung des Messerhalters 19 erstreckt. Im Verschiebebereich des Auslegers 330 befinden sich zwei Endschalter 34 und 35, über die jeweils ein Umschaltventil 36 bzw. 37 betätigbar ist. Von der Hydrauleitung 15 führt eine Leitung 38 zum Umschaltventil 37, von der Hydraulikleitung 16 führt eine Leitung 39 zum Umschaltventil 36.

Die Leitungen 38 und 39 sind bei nicht betätigten Umschaltventilen 36 bzw. 37 geschlossen und somit zunächst ohne hydraulische Funktion.

Wird nun beispielsweise das Umschaltventil 36 betätigt, so wird die Leitung 39 mit einer Steuerleitung 40 verbunden, die in eine zu einem Vorratsbehälter 26 führende Rücklaufleitung 41 mündet.

Bei Betätigung des Umschaltventils 37 wird die Leitung 38 mit einer Steuerleitung 42 verbunden, die ebenfalls in die zum Vorratsbehälter 26 führende Rücklaufleitung 41 einmündet.

In den beiden Steuerleitungen 40 und 42 sind Rückschlagventile 43 vorgesehen, welche die Steuerleitungen 40 oder 42 nur in Richtung Rücklaufleitung 41 freigeben.

Die Gesamtlänge der Zylinderkammern 23 und 24 des Arbeitszylinders 17 ist größer als der maximal mögliche Arbeitshub des Kolbens des Arbeitszylinders 17, der letztendlich durch den Hub des Pumpzylinders 14 bestimmt ist.

Während des Betriebes des Flachsilo-Entnahmegerätes ist es denkbar, daß durch ein Hindernis das Messer 4 festgehalten wird, ohne daß die Kolbenstange 18 des Arbeitszylinders 17 ihren vollen Arbeitshub ausgeführt hat. Der Kolben des Arbeitszylinders 17 bleibt somit in einer beliebigen Zwischenstellung stehen. In diesem Falle ist die Synchronisation zwischen Pumpzylinder 14 und Arbeitszylinder 17 aufgehoben. Die selbsttätige Synchronisation von Pumpzylinder 14 und Arbeitszylinder 17 erfolgt nun in der nachstehend angegebenen Weise:

Wird beispielsweise die Zylinderkammer 23 des Arbeitszylinders 17 mit Druck beaufschlagt, so wird der Kolben des Arbeitszylinders 17 nach unten bewegt. Nähert sich der Kolben des Arbeitszylinders 17 der unteren Stirnwand des Arbeitszylinders 17, so wird über den Ausleger 330 des Messerhalters 19 das Umschaltventil 37 betätigt. Dies erfolgt, wenn noch ein Abstand zwischen dem Kolben und der unteren Stirnwand des Arbeitszylinders 17 vorhanden ist. Nunmehr kann das aus der Zylinderkammer 21 des Pumpzylinders 14 verdrängte Öl über die Leitung 38, die Steuerleitung 42 und die Rücklaufleitung 41 in den Vorratsbehälter 26 entweichen, ohne daß der Kolben und die Kolbenstange 18 des Arbeitszylinders 17 weiter verschoben werden. Bei Hubwechsel des Pumpzylinders 14 wird nunmehr der Kolben und die Kolbenstange 18 des Arbeitszylinders 17 wieder nach oben bewegt, wobei über eine Saugleitung 27 aus dem Vorratsbehälter 26 in die Hydraulikleitung 15 und die Zylinderkammer 21 des Pumpzylinders 14 nachgesaugt wird.

Sofern sich eine Synchronisationsstörung bei druckbeaufschlagter Zylinderkammer 24 des Arbeitszylinders 17 einstellt, wird bei Erreichen einer oberen Endstellung des Kolbens des Arbeitszylinders 17 über den Ausleger 330 des Messerhalters 19 der dem Umschaltventil 36 zugeordnete Endschalter 34 betätigt. In dieser Stellung ist ebenfalls ein Abstand zwischen dem Kolben und der oberen Stirnwand des Arbeitszylinders 17 vorhanden. Das aus der Zylinderkammer 22 des Pumpzylinders 14 verdräng-

- 11 -

te Öl kann nun über die Leitung 39, die Steuerleitung 40 und die Rücklaufleitung 41 in den Vorratsbehälter 26 entweichen, ohne daß eine weitere Verschiebung des Kolbens des Arbeitszylinders 17 erfolgt.

Durch die Leitungen 38 und 39, die Umschaltventile 37 und 36 sowie die Rücklaufleitung 41 ist für jede der Zylinderkammern 23 und 24 des Arbeitszylinders 17 eine Druckentlastungseinrichtung verwirklicht, die eine Verschiebung des Kolbens des Arbeitszylinders 17 über eine bestimmte Lage hinaus verhindert.

Durch diese Maßnahme wird ein ruhiger Lauf des Flachsilo-Entnahmegerätes erreicht, da auf einfache Art und Weise ein Anstoßen des Kolbens an eine der Stirnwände des Arbeitszylinders 17 verhindert ist.

In Fig. 8 ist ein Arbeitszylinder 17 eines Flachsilo-Entnahmegerätes dargestellt, bei dem die Zylinderkammern 23 und 24 ebenfalls mit einer Druckentlastungseinrichtung ausgestattet sind.

Im oberen Endbereich der Zylinderkammer 23 ist eine Ringnut 44 vorgesehen, in die eine mit einem Rückschlagventil 45 ausgestattete Überströmbohrung 46 einmündet.

Die Zylinderkammer 24 ist in ihrem unteren Endbereich wie die obere Zylinderkammer 23 mit einer Ringnut 44 und einer ein Rückschlagventil 45 aufweisenden Überströmbohrung 46 versehen.

Der normale Arbeitshub des Kolbens des Arbeitszylinders 17 entspricht dem Abstand der beiden Ringnuten 44. Das heißt, bei störungsfreiem Betrieb bewegt sich der Kol-

BAD ORIGINAL

ben des Arbeitszylinders 17 im Bereich zwischen den beiden Ringnuten 44, ohne eine der beiden Ringnuten 44 zu überfahren.

Im Falle einer Störung kann nun der Kolben des Arbeitszylinders 17 über eine der beiden Ringnuten 44 hinaus verfahren werden, ohne an die jeweilige Stirnwand des Arbeitszylinders 17 anzustoßen. In einem derartigen Falle kann nun über eine der Überströmbohrungen 46 das nachfließende Öl in den jeweils druckfreien Bereich abfließen, ohne daß eine weitere Verschiebung des Kolbens des Arbeitszylinders 17 stattfindet.

Wird beispielsweise der Kolben des Arbeitszylinders 17 in der aus Fig. 8 ersichtlichen Stellung durch Druckbeaufschlagung der unteren Zylinderkammer 24 nach oben bewegt, so wird der Kolben zunächst die Ringnut 44 der oberen Zylinderkammer 23 überfahren und die im oberen Bereich des Arbeitszylinders 17 vorgesehene Überströmbohrung 46 freigeben. Nachdem die Überströmbohrung 46 freigegeben ist, kann weiter in die Zylinderkammer 24 einströmendes Öl in den oberhalb des Kolbens befindlichen druckfreien Raum entweichen.

Die gleiche Funktion ergibt sich, wenn der Kolben aus der in Fig. 8 ersichtlichen Stellung nach unten bewegt wird und dabei die untere Ringnut 44 überfährt.

Beim Ausführungsbeispiel gemäß Fig. 8 besteht also die Druckentlastungseinrichtung der beiden Zylinderkammern 23 und 24 aus den Ringnuten 44 und den Überströmbohrungen 46, deren Durchflußrichtung jeweils durch Rückschlagventile 45 bestimmt ist.

Bei der Konstruktion gemäß Fig. 7 kann durch Verschiebung der Umschaltventile 36 und 37 oder eines dieser beiden Ventile auf einfache Art und Weise der Arbeitshub des Arbeitszylinders verändert werden.

In Fig. 9 ist ein Ausführungsbeispiel gezeigt, bei dem das landwirtschaftliche Arbeitsgerät aus einem Anhänger 47 mit einem Kratzboden 48 besteht. Der Antrieb des Kratzbodens 48 erfolgt über ein Klinkenrad 49 und eine Klinke 50, wobei die Klinke 50 an einem konzentrisch zum Klinkenrad 49 verschwenkbaren Hebel 51 angeschlossen ist. Der Hebel 51 ist an der Kolbenstange 18 des Arbeitszylinders 17 angeschlossen und wird von diesem Kolben 18 des Arbeitszylinders 18 bewegt.

Wie insbesondere aus Fig. 10 sehr deutlich hervorgeht, kann in den Wirkbereich der Klinke 50 eine segmentartige Abdeckplatte 52 bewegt werden, um so die ständig hin- und herbewegte Klinke 50 außer Eingriff mit dem Klinkenrad 49 zu bringen, falls ein Weitertransport des Kratzbodens 48 nicht gewünscht wird.

Das in Fig. 11 im Schnitt dargestellte Getriebe 11, welches auf die Zapfwelle 9 des Schleppers aufgesteckt ist und über welches der Kurbelantrieb 10 zur Betätigung des Pumpzylinders 14 angetrieben wird, zeigt in beispielhafter Weise, daß die Drehzahl der Zapfwelle 9 des Schleppers innerhalb des Kurbelantriebes 10 derart untersetzt werden kann, daß die jeweils gewünschte Hubzahl des Pumpzylinders 14 erreicht wird.

Als weiteres Ausführungsbeispiel der Erfindung ist in den Fig. 12 und 13 eine an einen Schlepper anschließ-

- 14 -

bare Rüttelegge 53 gezeigt. Die Rüttelegge 53 ist mit zwei Paaren von gegenläufig zueinander bewegbaren Zinkenreihen 54a und 54b versehen, die über einen gemeinsamen Antriebshebel 55 bewegt werden. Der reine Antriebsmechanismus für die Zinkenreihen 54a und 54b ist an sich bekannt, so daß ein weiteres Eingehen hierauf sich erübrigt.

Der Antriebshebel 55 wird wiederum durch die Kolbenstange 18 des Arbeitszylinders 17 angetrieben, dabei dient gemäß der vorliegenden Erfindung der Pumpzylinder 14 als Druckerzeuger, und dessen Kolbenstange 13 wird durch den mit der Zapfwelle des Schleppers gekuppelten Kurbelantrieb 10 betätigt.

Die Ausführungsbeispiele machen deutlich, daß es vielfältige Möglichkeiten gibt, mittels eines Pumpzylinders und eines Arbeitszylinders Arbeitsaggregate von landwirtschaftlichen Arbeitsgeräten anzutreiben.

Die Vorteile dieses Antriebssystems liegen darin, daß auf Wunsch eine sehr hohe Leistung erzielt werden kann, die unabhängig von der Leistungsfähigkeit der Schlepperhydraulik ist, und daß ein insgesamt sehr einfacher Aufbau erreichbar ist, da zwischen Arbeitszylinder und Pumpzylinder ausschließlich hydraulische Verbindungsleitungen erforderlich sind.

## Bezugszeichenliste

| | | | |
|---|---|---|---|
| 1 | Gestell | 29 | Kolbenstange |
| 2 | Zinkengabel | 30 | Doppelschwinge |
| 3 | Führungsrahmen | 31 | Klinkenhebel |
| 4 | Messer | 32 | Klinkenrad |
| 5 | Schneidwerk | 33 | Leitungen |
| 6 | Teleskoparm | 34, 35 | Endschalter |
| 7 | Achsbolzen | 36, 37 | Umschaltventile |
| 8 | Haltestangen | 38, 39 | Leitungen |
| 9 | Zapfwelle | 40 | Steuerleitung |
| 10 | Kurbelantrieb | 41 | Rücklaufleitung |
| 11 | Getriebe | 42 | Steuerleitung |
| 12 | Kurbel | 43 | Rückschlagventile |
| 13 | Kolbenstange | 44 | Ringnut |
| 14 | Pumpzylinder | 45 | Rückschlagventil |
| 15 | Hydraulikleitung | 46 | Überströmbohrung |
| 16 | Hydraulikleitung | 47 | Anhänger |
| 17 | Arbeitszylinder | 48 | Kratzboden |
| 18 | Kolbenstange | 49 | Klinkenrad |
| 19 | Messerhalter | 50 | Klinke |
| 20 | Führungsrahmen | 51 | Hebel |
| 21, 22 | Zylinderkammern (von 14) | 52 | Abdeckplatte |
| 23, 24 | Zylinderkammern (von 17) | 53 | Rüttelegge |
| 25 | Überdruckventile | 54a, 54b | Zinkenreihen |
| 26 | Vorratsbehälter | 55 | Antriebshebel |
| 27 | Saugleitungen | 330 | Ausleger |
| 28 | Vorschubzylinder | | |

- 15 -

Patentansprüche

1. An einen mit einer Zapfwelle ausgestatteten Schlepper anschließbares landwirtschaftliches Arbeitsgerät, bei dem mindestens ein Arbeitsaggregat antreibbar ist,

d a d u r c h   g e k e n n z e i c h n e t ,

daß als Antriebsorgan für das Arbeitsaggregat mindestens ein hydraulischer Arbeitszylinder (17) vorgesehen ist, der seinerseits über mindestens einen, als Druckerzeuger dienenden und mittels eines Kurbelantriebes (10) betätigbaren Pumpzylinder (14) antreibbar ist, wobei der Kurbelantrieb (10) des Pumpzylinders (14) mit der Zapfwelle (9) des Schleppers kuppelbar ist.

2. Landwirtschaftliches Arbeitsgerät nach Anspruch 1, dadurch gekennzeichnet, daß ein Arbeitszylinder (17) vorgesehen ist, der ebenso wie der Pumpzylinder (14) als doppeltwirkender Zylinder ausgebildet und mit dem Pumpzylinder (14) baugleich ist.

3. Landwirtschaftliches Arbeitsgerät nach Anspruch 1, dadurch gekennzeichnet, daß als Arbeitszylinder (17) und als Pumpzylinder (14) jeweils zwei einfach wirkende Zylinder vorgesehen sind.

4. Landwirtschaftliches Arbeitsgerät nach einem der
   vorhergehenden Ansprüche, dadurch gekennzeichnet,
   daß der Kurbelantrieb (10) fest am Gestell des Arbeitsgerätes angeschlossen und beispielsweise über
   eine Gelenkwelle mit der Zapfwelle (9) des Schleppers kuppelbar ist.

5. Landwirtschaftliches Arbeitsgerät nach einem der Ansprüche 1 bis 3, dadurch gekennzeichnet, daß der Kurbelantrieb (10) unmittelbar auf die Zapfwelle (9) des
   Schleppers aufsteckbar ist.

6. Landwirtschaftliches Arbeitsgerät nach einem der
   vorhergehenden Ansprüche, dadurch gekennzeichnet,
   daß das aus Pumpzylinder(n) (14) und Arbeitszylinder(n)
   (17) sowie den erforderlichen Hydraulikleitungen (15,
   16) bestehende hydraulische System in sich geschlossen
   und durch zwei Überdruckventile (25) gesichert ist.

7. Landwirtschaftliches Arbeitsgerät nach einem der
   vorhergehenden Ansprüche, dadurch gekennzeichnet,
   daß in das Hydrauliksystem ein Vorratsbehälter (26)
   integriert ist, von dem aus zwei Saugleitungen (27)
   zu den Hydraulikleitungen (15,16) geführt sind.

8. Landwirtschaftliches Arbeitsgerät nach einem der
   vorhergehenden Ansprüche, dadurch gekennzeichnet,
   daß innerhalb des Hydrauliksystems ein Ölkühler vorgesehen ist und/oder daß die Zylinder (14,17) mit
   Kühlrippen versehen sind.

9. Landwirtschaftliches Arbeitsgerät nach einem der
   vorhergehenden Ansprüche, dadurch gekennzeichnet, daß die Zylinder (14,17) im Bereich der Leitungsanschlüsse mit vergrößertem Ringraum ausgestattet sind.

10. Landwirtschaftliches Arbeitsgerät nach einem der
vorhergehenden Ansprüche, dadurch gekennzeichnet,
daß jede Zylinderkammer (23,24) des Arbeitszylinders
(17) mit einer Druckentlastungseinrichtung versehen
ist, jede Druckentlastungseinrichtung in Abhängigkeit von der Stellung des Kolbens des Arbeitszylinders (17) zuschaltbar ist und daß bei zugeschalteter
Entlastungseinrichtung zwischen dem Kolben des Arbeitszylinders (17) und der jeweiligen Zylinderstirnwand ein Abstand vorhanden ist.

11. Landwirtschaftliches Arbeitsgerät nach Anspruch 10,
dadurch gekennzeichnet, daß die Druckentlastungseinrichtungen aus mechanisch schaltbaren Umschaltventilen (36,37) bestehen, über die Hydraulikleitungen
(15,16), die zu den Zylinderkammern (23,24) des Arbeitszylinders (17) geführt sind, durch Leitungen
(39,38) und Steuerleitungen (40,42) mit einer zu
einem Vorratsbehälter (26) führenden Rücklaufleitung
(41) verbindbar sind.

12. Landwirtschaftliches Arbeitsgerät nach Anspruch 10,
dadurch gekennzeichnet, daß jede Druckentlastungseinrichtung aus einer in den Arbeitszylinder (17)
eingebrachten Ringnut (44) mit einer in die Ringnut
(44) einmündenden Überströmbohrung (46) besteht, wobei die Durchflußrichtung der Überströmbohrung (46)
durch ein Rückschlagventil (45) bestimmt ist und die
Überströmbohrung (46) geöffnet ist, wenn der Kolben
des Arbeitszylinders (17) die Ringnut (44) in Rich- tung zur jeweiligen Stirnwand des Arbeitszylinders
(17) überfahren hat.

13. Landwirtschaftliches Arbeitsgerät nach einem der
vorhergehenden Ansprüche, dadurch gekennzeichnet,
daß das Arbeitsgerät ein an sich bekanntes Flachsilo-Entnahmegerät mit einem Gestell (1), welches im
unteren Bereich eine Zinkengabel (2) und im oberen
Bereich einen Führungsrahmen (3) aufweist, an dem ein
mit einem Messer (4) versehenes Schneidwerk (5) zum
Ausschneiden quaderförmiger Blöcke aus einem Flachsilo geführt ist, wobei das Messer (4) an dem durch
den Arbeitszylinder (17) heb- und senkbaren Messerhalter (19) befestigt ist.

14. Landwirtschaftliches Arbeitsgerät nach Anspruch 13,
dadurch gekennzeichnet, daß ein Vorschubzylinder (28),
der in an sich bekannter Weise einen das Schneidwerk
(5) tragenden Teleskoparm (6) antreibt, parallel zu
dem Arbeitszylinder (17) oder den Arbeitszylindern
(17) geschaltet ist.

15. Landwirtschaftliches Arbeitsgerät nach den Ansprüchen
11 und 13, dadurch gekennzeichnet, daß die Umschaltventile (36,37) durch Endschalter (34,35) betätigbar
sind, wobei die Endschalter (34,35) im Verschiebebereich eines am Messerhalter (19) befestigten Auslegers (330) angeordnet sind.

16. Landwirtschaftliches Arbeitsgerät nach Anspruch 15,
dadurch gekennzeichnet, daß die Umschaltventile (36,
37) gegenüber dem Messerhalter (19) parallel zu diesem verschiebbar und in jeder Verschiebeposition
feststellbar sind.

0090879

Strautmann

Fig.1

BAD ORIGINAL

Fig.2

Fig.3

Fig. 4

Fig. 5

Strautmann

Fig. 6

Strautmann

Fig. 7

Strautmann

Fig. 8

Fig.9

15  16  17  50

48  47  49  XI  14

7/10

0090879

Strautmann

Fig.11

9

10

11

13

14

Fig. 10

17    18    51

50

15

16

48

49

52

Strautmann

Fig. 12

0090879

Strautmann

Fig. 13

Europäisches
Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-C- 971 491 (MOLLY)<br><br>* Seite 2, Zeilen 122-126; Seite 3, Zeilen 1-87; Abbildung 1 *<br><br>--- | 1,2,4, 6,12 | A 01 F 25/20<br>A 01 B 71/00<br>A 01 D 55/264 |
| X | GB-A- 807 223 (KING)<br><br>* Seite 1, Zeilen 64-88; Seite 2, Zeilen 1-65; Abbildung 1 *<br><br>--- | 1,3,4, 5,6,7, 11 | |
| X | DE-A-2 929 782 (TRIOLIET - MULLOS)<br>* Seiten 12-22; Abbildungen 1,9 *<br><br>--- | 3,10, 13,14 | |
| X | US-A-2 564 164 (LINDEMAN)<br><br>* Spalte 3, Zeilen 60-75; Spalte 4; Spalte 5; Abbildungen 1,2 *<br><br>--- | 1,2,5, 6,7,11 | RECHERCHIERTE SACHGEBIETE (Int. Cl. ³) |
| A | CH-A- 299 950 (TOEDTLI)<br><br>--- | | A 01 F<br>A 01 D<br>A 01 B |
| A | US-A-2 569 507 (VON SCHLEGEL)<br><br>--- | | |
| A | US-A-2 539 720 (BENDER)<br><br>----- | | |

Der vorliegende Recherchenbericht wurde für alle Patentansprüche erstellt.

| Recherchenort | Abschlußdatum der Recherche | Prüfer |
|---|---|---|
| DEN HAAG | 18-04-1983 | VERMANDER R.H. |